(19) Europäisches Patentamt
European Patent Office
Office européen des brevets

(11) Veröffentlichungsnummer: **0 097 125**
**B1**

(12) # EUROPÄISCHE PATENTSCHRIFT

(45) Veröffentlichungstag der Patentschrift: **26.08.87**

(51) Int. Cl.[4]: **C 09 B 69/06**, C 09 B 67/54, D 06 L 3/12

(21) Anmeldenummer: **83810253.1**

(22) Anmeldetag: **09.06.83**

(54) **Verfahren zur Umwandlung schwerlöslicher anorganischer Salze kationischer Farbstoffe und Aufheller in leichter lösliche Salze organischer Säuren.**

(30) Priorität: *15.06.82 CH 3691/82*

(43) Veröffentlichungstag der Anmeldung: **28.12.83 Patentblatt 83/52**

(45) Bekanntmachung des Hinweises auf die Patenterteilung: **26.08.87 Patentblatt 87/35**

(84) Benannte Vertragsstaaten: **CH DE FR GB LI**

(56) Entgegenhaltungen:
**FR - A - 2 290 479**
**FR - A - 2 416 926**

(73) Patentinhaber: **CIBA-GEIGY AG, Klybeckstrasse 141, CH-4002 Basel (CH)**

(72) Erfinder: **Pfenninger, Heinz, Dr., Rebackerweg 30, CH-4411 Lupsingen (CH)**
Erfinder: **Bruttel, Beat, Dr., Ob den Reben 5, CH-4461 Böckten (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 097 125 B1

**Beschreibung**

Die Erfindung betrifft ein Verfahren zur Umwandlung schwerlöslicher anorganischer Salze kationischer Farbstoffe und Aufheller in leichter lösliche Salze organischer Säuren.

Die Löslichkeit der Salze kationischer Farbstoffe und optischer Aufheller in Wasser oder organischen Lösungsmitteln hängt nicht nur vom Farbstoff- bzw. Aufhellerkation, sondern vor allem auch vom Anion ab. So sind die allgemein bei der Synthese anfallenden Farbstoff- bzw. Aufhellersalze vielfach nicht gut wasserlöslich; es handelt sich hier um die Salze anorganischer Säuren, z.B. um die Chloride, Sulfate oder Methosulfate. Hingegen zeigen die gleichen Farbstoffe oder Aufheller, jedoch als Salze organischer Säuren (z.B. als Acetat) eine wesentlich höhere Wasserlöslichkeit.

Zur Herstellung konzentrierter Farbstoff- bzw. Aufhellerlösungen, die heute mehr und mehr als Flüssigmarken im Handel sind, benötigt man Farbstoff- bzw. Aufhellersalze mit einer guten Wasserlöslichkeit, denn nur so lässt sich der Lösungsmittelanteil in den Präparaten möglichst gering halten. Daneben ist aber auch bei der Herstellung fester Präparate eine hohe Löslichkeit des Farbstoffs oder Aufhellers von Vorteil, denn diese ermöglicht eine schonende und energiesparende Trocknung, da hochkonzentrierte Ausgangslösungen eingesetzt werden können.

In der Vergangenheit hat es nicht an Versuchen gefehlt, die Anionen schwerlöslicher kationischer Farbstoff- oder Aufhellersalze gegen den Säurerest von Carbonsäuren auszutauschen, um so deren Wasserlöslichkeit zu erhöhen.

Aus der FR-A-2 416 926 ist ein Verfahren bekannt, um leichter lösliche Salze von anionischen oder kationischen Farbstoffen oder optischen Aufhellern herzustellen. Wässrige Lösungen von Alkali- oder Erdalkalimetallsalzen von anionischen Farbstoffen oder Aufhellern oder Chloride, Sulfate oder Methosulfate von kationischen Farbstoffen oder Aufhellern werden von anorganischen Salzen mittels eines Membrantrennverfahrens weitgehend befreit und vor, während oder nach dieser Salzabtrennung mit Ammonium- oder Lithiumsalzen, sofern anionische Farbstoffe oder Aufheller vorliegen, oder mit Salzen cyclischer oder acyclischer organischer Säuren, sofern kationische Farbstoffe oder Aufheller vorliegen, versetzt. Man erhält so höher konzentrierte wässrige Farbstoff- oder Aufhellerlösungen.

In der DE-A-2 549 436 wird ein Verfahren angegeben, nach dem der anorganische Säurerest kationischer Farbsalze mittels Epoxiden chemisch gebunden wird. Diese chemische Umsetzung führt man in Gegenwart niederaliphatischer Carbonsäuren durch, deren Säurerest als Gegenion an die Stelle des gebundenen Anions tritt. Nach diesem Verfahren wird z.B. ein Farbstoffchlorid in Gegenwart von Essigsäure mittels Epichlorhydrin in das entsprechende Farbstoffacetat überführt. Aus dem Epichlorhydrin entsteht dabei Propylenchlorhydrin.

Nachteil des Verfahrens ist, dass das ausgetauschte Anion in Form einer nicht weiter verwertbaren organischen Verbindung gebunden wird, was einen Verlust an wertvollem organischem Material bedeutet. Ferner stellt der Austausch des Anions auf chemischem Weg einen zusätzlichen Reaktionschritt dar und gibt damit nicht zuletzt Anlass zur Bildung von unerwünschten Nebenprodukten.

Aufgabe war es somit, ein Verfahren zu finden, das diese Nachteile nicht aufweist, d.h. ein Verfahren zu entwickeln, das problemlos in der Durchführung ist und bei dem weder die Farbstoffqualität leidet, noch organische Abfallprodukte gebildet werden.

Diese Aufgabe wird überraschenderweise mit Hilfe eines Membrantrennverfahrens gelöst und zwar mittels der sog. Donnan-Dialyse (zur Theorie der Donnan-Dialyse siehe S.T. Hwang, K. Kammermeyer; Membranes in Separations; Wiley & Sons, N.Y. 1975).

Gegenstand der vorliegenden Erfindung ist somit ein Verfahren zur Umwandlung der anorganischen Salze, wie der Chloride, Sulfate oder Methosulfate kationischer Farbstoffe und Aufheller in leichter lösliche Salze organischer Säuren, ohne Zwischenisolierung der freien Base, dadurch gekennzeichnet, dass man den anorganischen Säurerest des Farbstoffes oder Aufhellers mittels Donnan-Dialyse gegen das Anion einer cyclischen oder acyclischen organischen Säure austauscht.

Die Donnan-Dialyse wird vorteilhaft in einer Austauscherzelle durchgeführt, die mittels einer semipermeablen Membran in zwei Kammern geteilt ist, die jeweils eine zur Membranoberfläche tangentiale Einlass- und eine zentrale Auslassöffnung besitzen. Sowohl die Farbstoff- bzw. Aufhellerlösung oder -suspension, als auch die Dialyselösung werden während des Austauschvorganges mittels einer Pumpe aus einem Vorratsbehälter durch die Austauscherzelle und wieder in diesen zurückgepumpt, wodurch sich der Kreislauf schliesst. Dabei sollte die Zwangszirkulation durch die Austauscherzelle vorzugsweise so geführt werden, dass die Lösungen bzw. die Suspension in möglichst turbulenter Strömung an der Membran vorbeifliesst.

Die von den Pumpen in das geschlossene System eingebrachte, als Temperaturerhöhung messbare Energie, kann gegebenenfalls mittels Wärmeaustauschern abgeführt werden.

Fig. 1 zeigt schematisch die Apparatur, mit der das erfindungsgemässe Verfahren durchgeführt wird: Ⓐ Austauscherzelle, Ⓜ Membran, Ⓕ Vorratsbehälter mit Farbstoff- oder Aufhellerlösung bzw. -suspension, Ⓓ Vorratsbehälter mit Dialyselösung, Ⓦ Wärmetauscher und Ⓟ Pumpen.

Bei der Donnan-Dialyse handelt es sich um einen Membranprozess, der ohne Anwendung von Druck durchgeführt wird. Die verwendeten Membranen haben die Eigenschaft, sowohl für das Gegenion des Farbstoff- bzw. Aufhellerkations, als auch für das Anion der Dialyselösung durchlässig zu sein, jedoch das Kation der Dialyselösung kaum und das Farbstoff- bzw. Aufhellerkation nicht durchtreten zu lassen.

Bei den Membranen handelt es sich um Anionenaustauschermembranen, deren Polymergerüst durch kationische Gruppen enthaltende polyfunktionelle Verbindungen modifiziert ist und deren Poren einen Durchmesser von 0,1 bis 50 µm aufweisen.

Das Polymergerüst der Membran besteht aus natürlichen, halbsynthetischen oder synthetischen Materialien, die als reaktionsfähige Gruppen beispielsweise Hydroxyl-, Amino- und/oder Amidoximgruppen enthalten. Derartige Materialien können mit geeigneten Reagenzien umgesetzt werden, die einerseits kationische Gruppen und andererseits mindestens eine unter Bildung einer chemischen (kovalenten) Bindung reaktionsfähige Gruppierung enthalten.

Beispielsweise können folgende polymere Verbindungen in der angegebenen Weise modifiziert werden:

- Celluloseacetate, z.B. solche mit niedrigem Acetylgruppengehalt, aber auch höher acylierte Cellulose, z.B. sog. Zweieinhalbacetat, oder
- Polyvinylalkohole, oder Polyvinylchlorid,
- Polyacrylnitril und Copolymere aus Acrylnitril und anderen äthylenisch ungesättigten Monomeren.

Als reaktive Reagenzien, die eine kationische Gruppe enthalten, kommen neben farblosen auch farbige Verbindungen in Betracht. Als kationische Gruppen sind z.B. die Ammonium; Phosphonium oder Sulfoniumgruppe genannt.

Es lassen sich aber auch Membranen verwenden, deren Grundgerüst aus einem inerten Polymer, wie z.B. Polyester oder Polyäthylen besteht, welches mit einem Austauscherharz belegt wurde. Bei der Herstellung derartiger Membranen bringt man entweder ein fertiges, bereits kationische Gruppen enthaltendes Austauscherharz auf den polymeren Träger auf oder aber das Austauscherharz wird erst auf dem Träger polymerisiert und anschliessend nach den üblichen Methoden, beispielsweise durch Quaternieren von Aminogruppen modifiziert.

Ferner kommen auch sowohl durch kationische als auch anionische Gruppen modifizierte Membranen in Frage, wobei jedoch die Zahl der kationischen Gruppen die der anionischen überwiegt. Bei den anionischen Gruppen handelt es sich z.B. um die Sulfato-, Sulfonsäure- oder Carbonsäuregruppe.

Mit derartigen Membranen werden zu Beginn des Verfahrens Ionenaustauschgeschwindigkeiten von bis zu 50 Mol, bezogen auf 1 $m^2$ Membranfläche und einem Tag Betriebsdauer erreicht.

Insbesondere bei Behandlung von Farbstoff- bzw. Aufhellerchloriden wird ein nahezu vollständiger Ionenaustausch erreicht. So liegt die mittlere Chloridionenkonzentration nach einer Betriebsdauer von 2 bis 3 Tagen, je nach Membranfläche, im Bereich von ca. 0,01 Mol pro Liter.

Mittels Donnan-Dialyse lassen sich beispielsweise die Anionen der folgenden wasserlöslichen kationischen Farbstoffe austauschen: Chloride, Sulfate oder Methosulfate der Methin- und Azamethinfarbstoffe, die die verschiedensten heterocyclischen Ringe enthalten können, sowie Farbstoffe der Diphenylmethan-, Triphenylmethan-, Oxazin-, Thiazin- und 1,2-Pyron-Reihe sowie Farbsalze der Arylazo- und Anthrachinon-Reihe mit externer Oniumgruppe, z.B. der Ammonium oder Hydraziniumgruppe. Die kationischen optischen Aufheller gehören z.B. folgenden Klassen an: Stilben-, Cumarin-, Pyrazin-, Pyrazolin-, Oxazin-, Oxazolyl-, Imidazolyl- und Naphthalsäureimidderivate.

Als Dialyselösung verwendet man vorteilhaft eine wässrige Lösung eines anorganischen Salzes einer cyclischen oder acyclischen organischen Mono- oder Polycarbonsäure, die durch Hydroxy, Halogen, $C_1$–$C_4$-Alkoxy, Nitro, Amino, $C_1$–$C_4$-Alkyl (im Falle aromatischer Säuren), Cyan oder Oxogruppen substituiert sein kann. In Frage kommen z.B. die wässrigen Lösungen der Salze folgender Säuren: gesättigte unsubstituierte Monocarbonsäuren, wie Ameisensäure, Essigsäure, Propion-, n-Valerian- und Capronsäure, substituierte niedere Monocarbonsäuren, wie Glykolsäure und Milchsäure, halogensubstituierte niederaliphatische Monocarbonsäuren, wie Chloressigsäure, Bromessigsäure, Dichlor- und Trichloressigsäure, α-Chlorpropion- und β-Chlorpropionsäure sowie Methoxyessigsäure, Cyanessigsäure und Glyoxalsäure. Als Salze aromatischer Carbonsäuren kommen z.B. Benzoate in Frage.

Unter Polycarbonsäuren sollen vor allem Di- und Tricarbonsäuren verstanden werden.

Beispiele gegebenenfalls substituierter Dicarbonsäuren sind Malonsäure, Bernsteinsäure, Glutarsäure, Adipinsäure, Weinsäure und Apfelsäure. Als Beispiel einer Tricarbonsäure sei die Zitronensäure genannt.

Die organischen Säuren werden vorzugsweise als Alkali- oder Erdalkalisalze eingesetzt, insbesondere als Natrium- oder Kaliumsalze. Bevorzugt verwendet man Lösungen von Alkali- oder Erdalkalisalzen niederaliphatischer Carbonsäure. Besonders geeignet sind Alkaliacetate und -formiate. Bei Verwendung von Lösungen dieser Salze als Dialyselösung erhält man nach Durchführung des erfindungsgemässen Verfahrens die entsprechenden Farbstoff- bzw. Aufhelleracetate oder -formiate, die sich durch eine hervorragende Wasserlöslichkeit auszeichnen.

Die Konzentration der dem Ionenaustausch unterworfenen Farbstoff- bzw. Aufhellerlösung oder -suspension beträgt vorteilhaft 10 bis 500 g/l, vorzugsweise 50 bis 300 g/l. Die Dialyselösung verwendet man allgemein in einer Konzentration von 0,5 bis 3 molar, vorzugsweise ca. 1 molar. Es wird stets mit einem Überschuss an Dialyselösung gearbeitet. Um in kurzen Zeiträumen einen möglichst weitgehenden Ionenaustausch zu erreichen, werden, bezogen auf 1 Mol Farbstoff bzw. Aufheller, ca. 2–20 Mol an Carbonsäuresalz eingesetzt.

Besonders bei Verwendung höherkonzentrierter Dialyselösungen findet gleichzeitig mit dem Ionenaustausch auch eine Aufkonzentrierung der Farbstoff- bzw. Aufhellerlösung oder -suspension statt. Bei Verwendung einer 1 molaren Natriumacetatlösung werden einer 0,3 bis 0,5 molaren

Farbstofflösung oder -suspension während 24 Stunden bis zu 10% Wasser entzogen.

Die nach Durchführung der Donnan-Dialyse erhaltene konzentrierte Farbstoff- oder Aufhellerlösung kann, gegebenenfalls nach Zugabe von Zusätzen, wie Bindemitteln, Entstäubungsmitteln, Dispergiermittel und/oder Coupagemitteln, durch Trocknen in ein festes Farbstoffpräparat überführt werden. Dank der erhöhten Farbstoffkonzentration benötigt man weniger Energie zum Trocknen. Man verwendet übliche Trocknungsverfahren, insbesondere die Sprühtrocknung.

Die aufkonzentrierte, Farbstoff- oder Aufhellerlösung kann aber auch direkt zu einer lagerstabilen Flüssigformulierung verarbeitet werden. In diesem Fall ist, gegebenenfalls nach Zugabe von den, für Flüssigformulierungen üblichen Beigaben, wie Textilhilfsmitteln, schaumdämpfenden Mitteln, Gefrierschutzmitteln, Feuchthaltemitteln, und/oder Antimikrobika, die Farbstoff- oder Aufhellerlösung nur noch durch Verdünnen und/oder mit Hilfe von Coupagemitteln auf einen vorgegebenen Endfarbstoffgehalt einzustellen.

Verwendung finden die Farbstoff- oder Aufhellerpräparate zur Herstellung von Färbe/Aufhellbädern, Klotzflotten oder Druckpasten, die sich vor allem zum Färben/Aufhellen oder Bedrucken von Textilmaterialien aus natürlichen oder synthetischen Fasern eignen.

Die folgenden Beispiele dienen zur Erläuterung der Erfindung. Der Wasserdurchfluss durch die Membran wird angegeben in Liter pro $m^2$ Membranfläche und Tag [$L/m^2 \cdot d$] und die Chlorid- bzw. Sulfat/Methosulfataustauschgeschwindigkeit – letztere abgekürzt mit S-Austauschgeschw. – wird angegeben in Mol pro $m^2$ Membranfläche und Tag [$Mol/m^2 \cdot d$].

Allgemeine Verfahrensweise

Es werden jeweils 0,5 L Farbstofflösung oder -suspension und 2 L 1 molare Natriumacetatlösung eingesetzt. Die beiden Flüssigkeitsströme werden an der Anionenaustauschermembran, die eine Fläche von 26,42 $cm^2$ hat, vorbeigepumpt und durch periodische Probenentnahme und Analyse der Verlauf des Ionenaustausches verfolgt. In den nachfolgenden Ausführungsbeispielen findet sich jeweils eine tabellarische Zusammenstellung der Analysendaten. In allen Beispielen wird der Farbstoff in Form von Rohfarbstoff verwendet, der neben dem reinen Farbstoff eine nicht näher bestimmte Menge an anorganischen Salzen enthält, deren Anionen während der Dialyse auch ausgetauscht werden.

Das Grundgerüst der in den folgenden Beispielen verwendeten Membran besteht aus Polyester (vergleichbare Ergebnisse werden auch mit Membranen auf Polyäthylen und PVC-Basis erhalten) belegt mit einem Austauscherharz, das quaternäre Ammoniumgruppen enthält.

Beispiel 1

Der Farbstoff der Formel

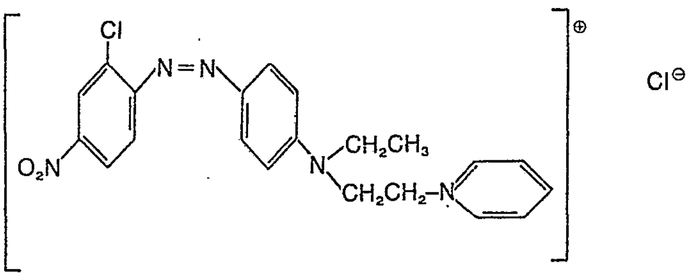

wird mit einer Anfangskonzentration von 210 g/L eingesetzt. Der Wasserflux durch die Membran beträgt 11 $l/m^2 \cdot d$. Die Endkonzentration der Farbstofflösung liegt bei 270 g/L, der Acetatgehalt beträgt 0,75 Mol/L.

| Zeit | gemessene mittlere Chloridkonzentration farbstoffseitig | | Chloridaustauschgeschw. bez. auf Membranfläche |
|---|---|---|---|
| h | g/L | Mol/L | $Mol/m^2 \cdot d$ |
| 0 | 18,1 | 0,51 | – |
| 8 | 17,2 | 0,48 | 45 |
| 24 | 14,1 | 0,40 | 32 |
| 31 | 9,9 | 0,28 | 33 |
| 72 | 5,1 | 0,14 | 13 |
| 96 | 2,6 | 0,07 | 9 |

Beispiel 2

Der Farbstoff der Formel

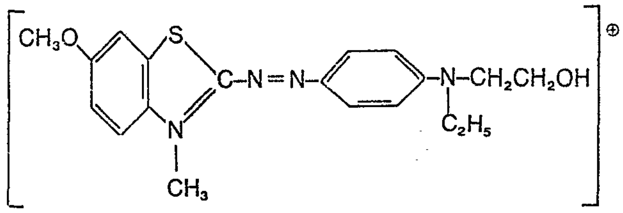

$Cl^{\ominus}$

wird mit einer Anfangskonzentration von ca. 200 g/L eingesetzt. Der Wasserflux durch die Membran beträgt 14 L/m$^2$ · d. Die Endkonzentration der Farbstofflösung liegt bei 260 g/L, der Acetatgehalt beträgt 0,6 Mol/L.

| Zeit<br>h | gemessene mittlere Chloridkonzentration farbstoffseitig<br>g/L | <br>Mol/L | Chloridaustausch-geschw. bez. auf Membranfläche<br>Mol/m$^2$ · d |
|---|---|---|---|
| 0 | 4,9 | 0,14 | – |
| 24 | 3,87 | 0,11 | 19 |
| 48 | 1,20 | 0,03 | 6 |
| 72 | 0,30 | 0,01 | 1,4 |

Beispiel 3

Die der Dialyse unterworfene Farbstofflösung enthält den Farbstoff der Formel

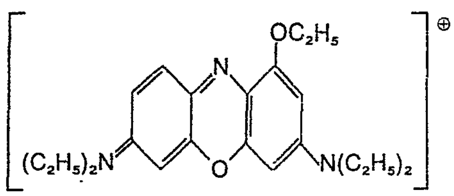

$Cl^{\ominus}$

in einer Anfangskonzentration von ca. 200 g/L. Der Wasserflux durch die Membran beträgt 14 L/m$^2$ · d. Die Endkonzentration der Farbstofflösung liegt bei 235 g/L, der Acetatgehalt beträgt 0,6 Mol/L.

| Zeit<br>h | gemessene mittlere Chloridkonzentration farbstoffseitig<br>g/L | <br>Mol/L | Chloridaustausch-geschw. bez. auf Membranfläche<br>Mol/m$^2$ · d |
|---|---|---|---|
| 0 | 4,3 | 0,12 | – |
| 10 | 3,1 | 0,09 | 31 |
| 24 | 1,8 | 0,05 | 16 |
| 48 | 0,4 | 0,01 | 2 |

Beispiel 4

Der Farbstoff der Formel

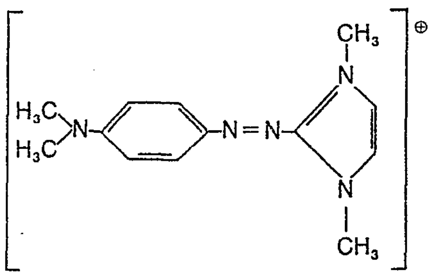

$Cl^{\ominus}$

wird mit einer Anfangskonzentration von 50 g/L eingesetzt. Der Wasserflux durch die Membran beträgt 10 L/m$^2$ · d. Nach Durchführen des Ionenaustausches hat sich die Farbstoffkonzentration auf einen Wert von 64 g/L erhöht. Der Acetatgehalt der Lösung beträgt 0,7 Mol/L.

| Zeit<br>h | gemessene mittlere Chloridkonzentration farbstoffseitig<br>g/L | <br>Mol/L | Chloridaustausch-geschw. bez. auf Membranfläche<br>Mol/m$^2$ · d |
|---|---|---|---|
| 0 | 8,1 | 0,23 | – |
| 3 | 7,4 | 0,21 | 28 |
| 6 | 6,7 | 0,19 | 14 |
| 24 | 4,9 | 0,14 | 14 |
| 48 | 1,6 | 0,04 | 4,6 |

Beispiel 5

Die Farbstoffe der Formeln

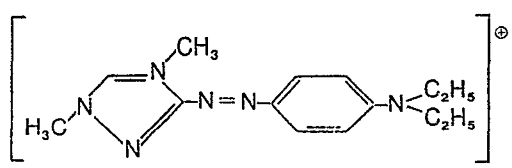

Sulfat/Methosulfat

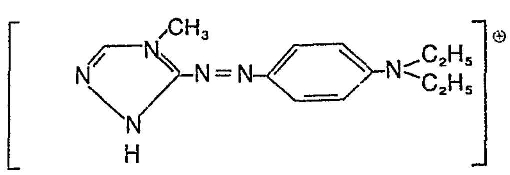

Sulfat/Methosulfat

werden als Gemisch mit einer Konzentration von ca. 300 g/L eingesetzt. Der Endacetatgehalt der Lösung beträgt 0,6 Mol/L.

| Zeit | gemessene mittlere Sulfat/Methosulfat-konzentration farbstoffseitig | | S-Austausch-geschw. bez. auf Membranfläche |
|---|---|---|---|
| h | g Schwefel/L | Mol/L | $Mol/m^2 \cdot d$ |
| 0 | 43,5 | 1,4 | – |
| 48 | 41,1 | 1,3 | 22 |
| 96 | 34,1 | 1,1 | 19 |

Beispiel 6

Die der Dialyse unterworfene Farbstofflösung enthält den Farbstoff der Formel

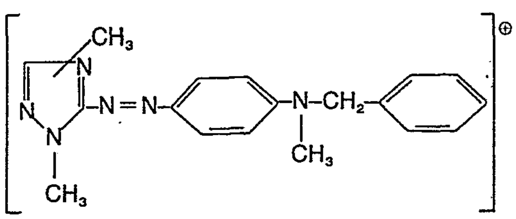

Sulfat/Methosulfat

in einer Konzentration von 140 g/L. Der Wasserflux durch die Membran beträgt 10 $L/m^2 \cdot d$. Während der Dialyse steigt die Farbstoffkonzentration auf einen Endwert von 180 g/L. Der Acetatgehalt der Lösung beträgt am Ende der Dialyse 0,7 Mol/L.

| Zeit | gemessene mittlere Sulfat/Methosulfat-konzentration farbstoffseitig | | S-Austausch-geschw. bez. auf Membranfläche |
|---|---|---|---|
| h | g Schwefel/L | Mol/L | $Mol/m^2 \cdot d$ |
| 0 | 14,0 | 0,44 | – |
| 96 | 11,2 | 0,35 | 15 |

Beispiel 7

Die gemäss Beispiel 2 erhaltene Farbstofflösung, die den Farbstoff in der Acetatform enthält, kann direkt als Flüssigformulierung verwendet werden. Die Formulierung ist lagerstabil – nach 45tägiger Lagerung bei Raumtemperatur und bei 40 °C unverändert – und ergibt auf Polyacrylgarn eine um 40% höhere Farbstärke, als die unbehandelte Farbstoffsuspension, in der der Farbstoff als Chlorid vorliegt.

Beispiel 8

Ein Teil der gemäss Beispiel 2 erhaltenen Farbstofflösung wird mit 10 Gew.-% bezogen auf Farbstoff, an Dextrin versetzt und mittels eines Labor-Sprühtrockners getrocknet. Man erhält auf diese Weise ein festes Farbstoffpräparat, das eine ausgezeichnete Kaltwasserlöslichkeit besitzt und sich beim Einstreuen in kaltes Wasser sofort auflöst.

Beispiel 9

500 ml einer 10%igen wässrigen Suspension des optischen Aufhellers der Formel

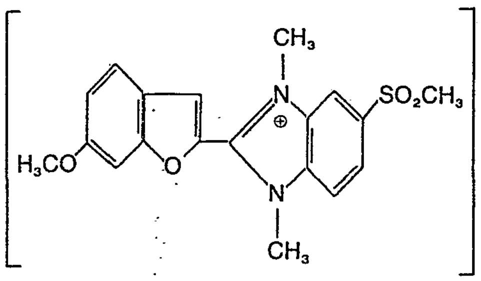

$H_3COSO_3^{\ominus}$

werden der Donnan-Dialyse unterworfen, wobei eine Austauscherzelle mit einer Membranfläche von 38 $cm^2$ verwendet wird. Als Dialyselösung verwendet man 2 L einer 1 molaren Natriumacetatlösung. Zu Beginn der Dialyse beträgt der Gehalt an Methosulfat in der Aufhellersuspension 2,37 g/L. Nach einer Betriebsdauer von 5 Tagen ist nur noch ein Methosulfatgehalt von 0,45 g/L feststellbar, während der Acetatgehalt 21,4 g/L beträgt. Das entspricht einer Austauschrate von 86%.

Verwendet man anstelle der Natriumacetatlösung 2 L 1 molare Essigsäure, so stellt man nach 5 Tagen einen Methosulfatgehalt von 1,14 g/L und einen Acetatgehalt von 44,3 g/L fest, was einer Austauschrate von 56% entspricht.

**Patentansprüche**

1. Verfahren zur Umwandlung schwerlöslicher anorganischer Salze kationischer Farbstoffe und Aufheller in leichter lösliche Salze organischer Säuren, ohne Zwischenisolierung der freien Base, dadurch gekennzeichnet, dass man den organischen Säurerest des Farbstoffes oder Aufhellers mittels Donnan-Dialyse gegen das Anion einer cyclischen oder acyclischen organischen Säure austauscht.

2. Verfahren gemäss Anspruch 1, dadurch gekennzeichnet, dass man als schwerlösliche anorganische Salze kationischer Farbstoffe und Aufheller, deren Chloride, Sulfate oder Methosulfate einsetzt.

3. Verfahren gemäss Anspruch 1, dadurch gekennzeichnet, dass man die Donnan-Dialyse in einer Austauscherzelle durchführt, in der die Farbstoff- bzw. Aufhellerlösung oder -suspension und die Dialyselösung durch eine semipermeable Membran voneinander getrennt sind, und beide Lösungen bzw. Suspension und Lösung an der Membranoberfläche vorbeigeführt werden.

4. Verfahren gemäss Anspruch 3, dadurch gekennzeichnet, dass als semipermeable Membran eine Anionenaustauschermembran verwendet wird, deren Polymergerüst durch ionische Gruppen enthaltende polyfunktionelle Verbindungen modifiziert ist und deren Poren einen Durchmesser von 0,1 bis 50 μm aufweisen.

5. Verfahren gemäss Anspruch 1, dadurch gekennzeichnet, dass man als Dialyselösung eine wässrige Lösung eines anorganischen Salzes einer cyclischen oder acyclischen Mono- oder Polycarbonsäure, die durch Hydroxy, Halogen, $C_1$–$C_4$-Alkoxy, Nitro, Amino, $C_1$–$C_4$-Alkyl (im Falle aromatischer Säuren), Cyan oder Oxogruppen substituiert sein kann, verwendet.

6. Verfahren gemäss Anspruch 5, dadurch gekennzeichnet, dass man als Dialyselösung eine wässrige Lösung eines Alkali- oder Erdalkalisalzes einer niederaliphatischen Carbonsäure verwendet.

7. Verfahren gemäss Anspruch 6, dadurch gekennzeichnet, dass man als Dialyselösung die wässrige Lösung eines Alkaliacetats oder -formiats verwendet.

8. Verfahren gemäss Anspruch 3, dadurch gekennzeichnet, dass die Konzentration der Farbstoff- bzw. Aufhellerlösung oder -suspension 10 bis 500 g/L beträgt und die Dialyselösung 0,5 bis 3 molar ist.

9. Verfahren gemäss Anspruch 1, dadurch gekennzeichnet, dass gleichzeitig mit dem Ionenaustausch eine Aufkonzentrierung der Farbstoff- bzw. Aufhellerlösung oder -suspension stattfindet.

**Claims**

1. A process for converting sparingly soluble inorganic salts of cationic dyes and fluorescent whitening agents into more readily soluble salts of organic acids without isolation of the free base, which process comprises replacing the inorganic acid radical of the dye or fluorescent whitening agent by the anion of a cyclic or acyclic organic acid by means of Donnan dialysis.

2. A process according to claim 1, wherein the sparingly soluble inorganic salts of cationic dyes and fluorescent whitening agents are their chlorides, sulfates or methosulfates.

3. A process according to claim 1, wherein the Donnan dialysis is carried out in an exchange cell in which the solution or suspension of the dye or fluorescent whitening agent and the dialyses solution are separated from each other by a semipermeable membrane, and the two solutions or the suspension and solution are passed along the surface of the membrane.

4. A process according to claim 3, wherein the semipermeable membrane is an anion exchange membrane whose polymer backbone has been modified by polyfunctional compounds containing ionic groups and whose pores have a diameter of 0.1 to 50 μm.

5. A process according to claim 1, wherein the dialysis solution is an aqueous solution of an inorganic salt of a cyclic or acyclic monocarboxylic or polycarboxylic acid which can be substituted by hydroxyl, halogen, $C_1$–$C_4$ alkoxy, nitro, amino, $C_1$–$C_4$ alkyl (in the case of aromatic acids), cyano or oxo groups.

6. A process according to claim 5, wherein the dialysis solution is an aqueous solution of an alkali metal or alkaline earth metal salt of a lower aliphatic carboxylic acid.

7. A process according to claim 6, wherein the dialysis solution is an aqueous solution of an alkali metal acetate or alkali metal formate.

8. A process according to claim 3, wherein the concentration of the solution or suspension of the dye or fluorescent whitening agent is 10 to 500 g/litre, and that of the dialysis solution is 0.5- to 3-molar.

9. A process according to claim 1, wherein the ion exchange is accompanied by enrichment of the solution or suspension of the dye or fluorescent whitening agent.

**Revendications**

1. Procédé d'échange de sels inorganiques peu solubles de colorants et d'azurants cationiques en sels facilement solubles d'acides organiques, sans isolement de la base libre, caractérisé en ce qu'on échange le résidu acide inorganique du colorant ou de l'azurant, par une dialyse de Donnan, contre l'anion d'un acide organique cyclique ou acyclique.

2. Procédé selon la revendication 1, caractérisé en ce qu'on utilise, comme sels inorganiques peu solubles de colorants et azurants cationiques, leurs chlorures, sulfates ou méthosulfates.

3. Procédé selon la revendication 1, caractérisé en ce qu'on réalise la dialyse de Donnan dans une cellule d'échange dans laquelle la solution ou la suspension de colorant ou d'azurant et la solution de dialyse sont séparées l'une de l'autre par une membrane semi-perméable, les deux solutions, ou la suspension et la solution, passant sur la surface de la membrane.

4. Procédé selon la revendication 3, caractérisé en ce qu'on utilise comme membrane semi-perméable une membrane échangeuse d'anions dont le squelette polymère est modifiée par des composés polyfonctionnels comportant des groupes ioniques, et dont les pores ont un diamètre de 0,1 à 50 μm.

5. Procédé selon la revendication 1, caractérisé en ce qu'on utilise comme solution de dialyse une solution aqueuse d'un sel inorganique d'un acide mono- ou polycarboxylique cyclique ou acyclique,

qui peut être substitué par des radicaux hydroxy, halogéno, alcoxy en $C_1$–$C_4$, nitro, amino, alkyle en $C_1$–$C_4$ (dans le cas des acides aromatiques), cyano ou oxo.

6. Procédé selon la revendication 5, caractérisé en ce qu'on utilise comme solution de dialyse une solution aqueuse d'un sel de métal alcalin ou de métal alcalino-terreux d'un acide carboxylique aliphatique inférieur.

7. Procédé selon la revendication 6, caractérisé en ce qu'on utilise comme solution de dialyse la solution aqueuse d'un acétate ou formiate d'un métal alcalin.

8. Procédé selon la revendication 3, caractérisé en ce que la concentration de la solution ou de la suspension de colorant ou d'azurant est de 10 à 500 g/l, et que la solution de dialyse est de 0,5 à 3 molaire.

9. Procédé selon la revendication 1, caractérisé en ce qu'a lieu, simultanément à l'échange d'ions, une concentration de la solution ou de la suspension de colorant ou d'azurant.

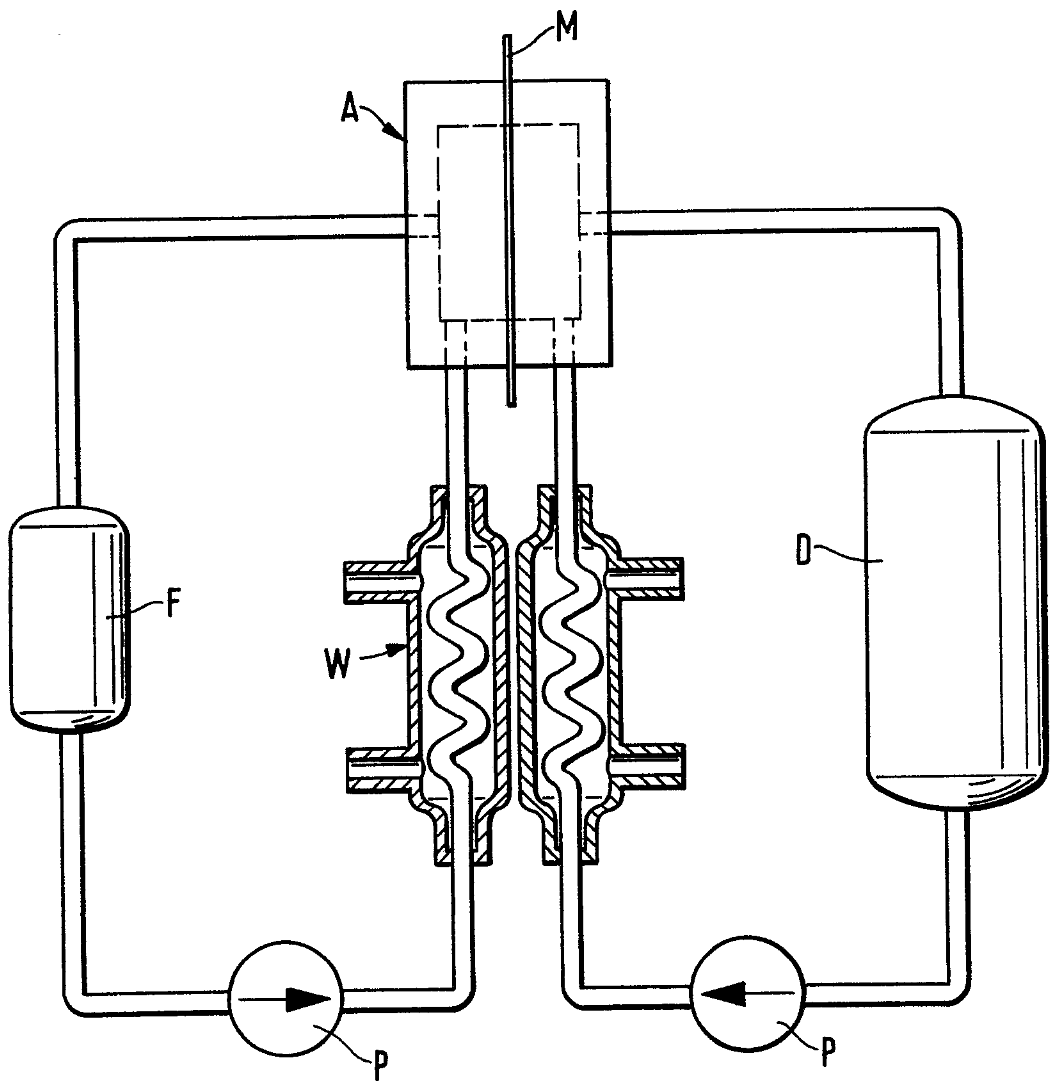
M
A
F
W
D
P
P